# EUROPEAN PATENT APPLICATION

(11) **EP 1 249 180 A2**
(43) Date of publication of application: **16.10.2002**
(21) Application number: 02076023.7
(22) Date of filing: 15.03.2002
(51) Int. Cl.: A23P 1/02, A23P 1/06, A23L 1/00

(54) **Structured particulate systems**

(30) Priority: 26.03.2001 US 816864
(71) Applicant: UNILEVER N.V., 3013 AL Rotterdam (NL); UNILEVER PLC, London EC4P 4BQ (GB)
(72) Inventor: Cain, Frederick William, 1521 AZ Wormerveer (NL); McNeill, Gerald Patrick, Channahon, Illinois 60410-5249 (US); Tongue, Tom, Channahon, Illinois 60410-5249 (US)
(74) Representative: Kleiborn, Paul Erik

(57) **Abstract**

Structured particulate systems of active solid organic components in a matrix in a weight ratio of 99:1 to 1:99 and a mean weight diameter of 25 to 1500 microns wherein the active organic component is selected from the group consisting of oleanoic acid, ursolic acid, folic acid, policosanol, phytosterols, or derivatives or salts thereof are novel and can be used to improve the oral properties and/or the homogeneity of the organic, solid, active component in a food product.

## Description

The use of solid organic active components in foods and in particular in health foods is well known nowadays. Examples of active organic components that are applied herefore are e.g. folic acid, ursolic acid, phytosterols, oleanolic acid and policosanol or derivatives or salts thereof. These components are added to the food as small particles (e.g. with a size of 2 to 250 microns) or as a solution after being dissolved in a solvent. Neither of these delivery forms have been found to be satisfactory because the addition as small particles led to problems with oral mouthfeel and to problems with the bioavailability of the components, while also the homogeneity of the food product was poor due to a limited dispersability of the components in the food products. Delivery in the form of a solution in a solvent also led to problems with mouthfeel and bioavailabilty. Moreover this delivery form introduced a solvent in the food product that had to be food grade and which is not always easily available for the type of component that needs to be introduced, while the solvent also easily could affect the texture of the food product in a negative sense. Further the presence of a solvent diluted the amount of active component in the food product.

We studied whether we could find a solution for above problems and this study resulted in the finding of a new delivery form for the solid organic active components.

Therefore our invention concerns in the first instance novel structured particulate systems comprising active, organic, solid component(s) in a matrix in a weight ratio of 1 : 99 to 99 : 1, preferably 5 : 95 to 95 : 5, more preferably 15 : 85 to 85 : 15 and wherein the active, organic, solid component(s) preferably is selected from one or more of the components from the group consisting of oleanoic acid, ursolic acid, folic acid, policosanol, phytosterols, soy protein isolate or derivatives or salts thereof and wherein the mean weight diameter of the particles of the structured particulate system ranges from 25 to 1500 microns.

The active component is incorporated completely in the matrix and the particle size of the solid active organic component in the system will be about the same as the size of these components used as starting material for the preparation of the structured particulates. The matrix forms a kind of network wherein the active solid organic components are incorporated. The particle size of the particulate system ,expressed as mean weight diameter is greater than the size of the individual components where it is made of, still we found that the oral properties were improved while also positive effects were noticed on bioavailability and dispersability of these systems compared with the active organic components. This was surprising.

The best performance of our novel system was observed when the system displayed a loose bulk density of 0.1 to 1.1 , preferably 0.3 to 0.6 Kg / l Loose bulk density being measured by measuring the volume of a known mass powder sample, that has passed through a screen into a gradulated cylinder. The procedure is described in USP < 616 < Bulk Density and Tapped Density.

The mean weight diameter of the particles of our novel partiulate system preferably ranges from 50 to 400 micron ,in particular from 60 to 300 micron.

The weight ratio between the active solid organic component and the matrix can range within a broad range but we found that the best results were obtained if this ratio was from 80 : 20 to 20 : 80, in particular from 40 : 60 to 60 : 40.

The particle size of the starting active solid organic component can range from 2 to 275 micron and this results in a discrete particle size hereof within the total structured particulate system of 2 to 275, preferably 5 to 250, most preferably 7 to 200 microns.

The active solid organic component is preferably a nutritionally active component that in particular improves the oral properties of a food product, or the bioavailability of the active, organic, solid component or the dispersability of the active component in a food.

The matrix can be selected from a broad range of materials as long as they are edible. However we prefer to use a matrix selected from the group consisting of polysaccharides, modified polysaccharides, sugars, gums, thickeners, stabilisers, syrups, flours, starches, dextrose, maltodextrins and celluloses. The particle size of the particles of the matrix can vary between 1 and 350 micron, preferably between 5 and 200 micron, more preferably between 25 and 100 micron.

According to another aspect of our invention our invention also concerns with a method for improving the oral properties and /or the homogeneity of an organic, solid, active component in a food product by incorporating in the food product an effective amount, preferably 0.01 to 50wt % ,more preferably 1 to 30 wt % on food product of the structured particulate system of the invention.

Preferred food products herefore are selected from the group consisting of margarine, spreads, baked goods, extruded goods, confections, ice-creams and dairy products. The particulate system being present herein in amounts effective to achieve the desired effects. These amounts are different for the different active organic compounds and for the different food products but will range in general between 0.01 and 50 wt % on total food product. In this way the use of a normal daily amount of food product can satisfy between 10 and 100 % of the recommended daily amount of the active organic component. According to a last aspect of our invention our invention also concerns with a process for preparing the structured particulate system according to the invention wherein
(i) a solid, organic active component is mixed with a matrix into a homogeneous powder
(ii) a solvent, preferably water is added to part of the powder obtained to dissolve the matrix resulting in an suspension of the active component in water
(iii) part of the powder resulting from step (i) is suspended in the expansion chamber of a fluid bed
(iv) the suspension resulting from (ii) is sprayed onto the suspended powder of step (iii) in the expansion chamber and dried rapidly by a heating medium , preferably heated air.

### EXPERIMENTAL PART

### Folic Acid, nutritionally active particulate component

Folic acid is used as the active component It has a mean weight diameter of 246 microns and a loose bulk density of 0.2g/cc.

The mean weight diameters is calculated as follows: weight fraction at screen multiplied by screen opening (microns), summed for all screen sizes.

### Example I

### Procedure for making structured particulate Folic Acid on a fluid bed.

Formulas are mentioned in Table I for a Folic Acid content of respectively 25% & 50% in the structured particulate.

**Table I**

| **Ingredients** | **Formula 25%** | | **Formula 50%** | |
|---|---|---|---|---|
| **Product Bowl** | | | | |
| 6X Powder Sugar | 50% | 30kg | 34% | 20.4kg |
| Folic Acid | 26.5% | 15.9kg | 53% | 31.8kg |
| Dextrose | 21.7% | 13.02kg | 11.2% | 6.72kg |
| Microcrystalline Cellulose | 0.6% | 0.36kg | 0.6% | 0.36kg |

| **Spray Solution** | | | | |
|---|---|---|---|---|
| Maltodextrin M-100 | 0.6 % | 0.36kg | 0.6% | 0.36kg |
| Dextrose | 0.6% | 0.36kg | 0.6% | 0.36kg |
| Water | 12kg | | 12 kg | |

### I. Preprocessing:

A. The raw ingredients are weighed as detailed in Table I.
B. The spray solution ingredients are mixed with warm water (20-40°C) until homogeneous.

### II. Process:

A. 30kg 6X Powder Sugar, 15.9kg Folic Acid, 13.02kg Dextrose, and 0.36kg microcrystalline cellulose are placed in a product bowl on the fluid bed.
B. The following processing conditions are set on the control panel.

| | | |
|---|---|---|
| (a). | Nozzle Height | Middle Range |
| (b). | Nozzle Port | 1.8mm |
| (c). | Inlet Air Temp | 98-100 °C |
| (d). | Outlet Air Temp | 40-42°C |
| (e). | Spraying Air Temp | Ambient |
| (f). | Spraying Air Pressure | 3.75 bar |
| (g). | Operation Air Volume | Adjusted to best fluidization level |
| (h). | Spray Rate | 250g/min |
| (i). | Humidification | Minimum |

C. The inlet air flap is adjusted until the operating air volume has best fluidization level.
D. The powder is fluidized until the outlet air temperature reaches 38-40°C. The spray solution spray line is connected to the fluid bed and spraying is started at a spray rate of 250 grams/minute.
E. After the spraying is completed, water is added to the tank, and spraying is continued at the same spray rate for 3 minutes.

| **Post Spray Processing:** | |
|---|---|
| A. | Product is dried at an outlet temperature of 48°C. |
| B. | Sample is taken for loss on drying. Specification is 2.5% max. The fluid bed is shut down when moisture meets specification. |
| C. | Particle size is measured on US#20, 40, 60, 100, 200, & Pan. |
| D. | Product is sieved on a US#20 Screen to remove oversized particulates. Oversized material is ground and added back to final product. |
| E. | Final product is analyzed for particle size, loss on drying, loose bulk density and percent folic acid. |
| ***Note*:** Same Operating Procedure is used for the 50% formula. | |

| **Final Product Specifications** | | |
|---|---|---|
| | Formula 25% | Formula 50% |
| % Folic Acid | 25 | 50 |
| Loss on Drying | 2.5% max. | 2.5% max. |
| Particle Size | | |
| On US#20 (840 microns) | 0.0% | 0.0% |
| On US#60 (250 microns) | 30% max. | 30% max. |
| Thru US#200 (74 microns) | 30% max. | 30% max. |

### Example II

Comparative homogeneity test of structured particulate Folic Acid with non-structured active particulate component:
1. 10 milligrams of non-structured active particulate component Folic Acid is added to 1 kg of vegetable oil and 40 milligrams of structured particulate Folic Acid (25%) to another 1 kg of vegetable oil.
2. Each sample is mixed for 5 minutes with continuous visual inspection for homogeneity.

It is demonstrated that structured particulate Folic Acid disperses readily in food products resulting in a homogeneous distribution of folic acid in the products with accurate dosing. This is in contrast to non-structured active particulate component Folic Acid which clumps together and sticks to the container walls, making it extremely difficult to deliver an accurate dose of Folic Acid to the food product.

### Apple extract containing 30% UA, nutritionally active particulate component

### Example III

### Procedure for making structured particulate Apple extract containing 30 % ursolic acid on a fluid bed.

Formula mentioned in Table II for a Apple extract content of respectively 25% in the structured particulate added Polyglycerol Esters (Santone 8-1-0) as part of the binder in the spray solution.

**Table II**

| **Ingredients** | **Formula 25%** |
|---|---|
| **Product Bowl** | |
| 6X Powder Sugar | 50% 1.5kg |
| Apple extract | 26.5% 0.795kg |
| Dextrose | 20.5% 0.616kg |
| Microcrystalline Cellulose | 0.6% 0.018kg |

| **Spray Solution** | |
|---|---|
| Maltodextrin M-100 | 0.6 % 0.018kg |
| Dextrose | 0.6 % 0.018kg |
| Polyglycerol Esters | |
| (Santone 8-1-0) | 1.2 % 0.035kg |
| Water | 0.7kg |

### Process:

A. 6X Powder Sugar, Apple extract, Dextrose, and Microcrystalline cellulose are placed in a product bowl on the fluid bed.
B. The equipment used for this example was a pilot-scale 5-kg fluid-bed drier top spray.
C. The maltodextrin, remaining dextrose and polyglycerol esters (Santone 8-1-0) and were mixed in warm water at 50°C as the spray solution.

An initial product temperature range of about 50-55°C was used and an air volume, sufficient (damper 1/2 open) to fluidize the product was set. The spray solution was sprayed onto the product in the bowl at a spray rate of 60 grams per minute with an atomization air pressure of 3.75 bar. The spray rate was increased to 80 grams per minute when 200 grams of solution was remaining. Upon completion of the spray solution, the structured particulate was dried at an outlet air temperature of 50°C for 10 minutes. The structured particulate was measured for loss on drying using a Metler LP-16 Metler Moisture Balance result was 2.6%. The material was sized on a US#16 mesh using a Sweco Sifter to remove any oversized material. The analytical data for Example I (25% Apple extract) are shown in Table II. The methods used for analyzing the structured particulate can be found in USP XXIII/NF19.

| **Table II: Analytical Data** | |
|---|---|
| | Apple extract 25% |
| PS on #16 | 0.0% |
| 20 | 10.1% |
| 60 | 57.7% |
| 200 | 25.8% |
| PAN | 6.4% |
| Loose Bulk | 0.39g/cc |
| Loss on Drying | 2.5% |
| Mean weight diameter | 252 microns |

The supplier's data for the active component (raw material calcium citrate) indicates that the material has a mean weight diameter of less than 17 microns.

### Example IV. Homogeneity

Comparative homogeneity test of structured particulate Apple extract and with non-structured active particulate component:
1. 1 grams of non-structured active particulate component Apple extract is added to 100 ml of 70 degree C water and 4 grams of structured particulate (Apple extract 25%) to another 100 ml of water.
2. Each sample was mixed for 5 minutes with continuous visual inspection for homogeneity.

It is demonstrated that structured particulate Apple extract 25% disperses readily in water resulting in a homogeneous distribution of Apple extract 25% in the water with accurate dosing. This is in contrast to non-structured active particulate component Apple extract that clumped together and sticks to the container walls, making it extremely difficult to deliver an accurate dose of Apple extract to the water.

### Example V. Flowability

Comparative flow properties test of structured particulate Apple extract and with non-structured active particulate component:
1. 100 grams of non-structured active particulate component Apple extract is added to 60 degree powder funnel, 80mm ID, not allowing any material to pass through and 100 grams of structured particulate (Apple extract 25%) to another 60 degree powder funnel, 80mm ID, not allowing any material to pass through.
2. The caps were removed from the funnels allowing each sample to pour out. The structured particulate (Apple extract 25%) funnel emptied in 4 seconds were as the non-structured particulate component Apple extract required vibration to allow the material to pass through the funnel.

It is demonstrated that structured particulate Apple extract 25% disperses readily with improved flow properties which allows for accurate dosing. This is in contrast to non-structured active particulate component Apple extract that clumped and sticks in the funnel making it extremely difficult to deliver an accurate dose of Apple extract.

### Soy protein isolates , nutritionally active component

### Example VI

### Procedure for making structured particulate Soy Protein Isolates ML-70 on a fluid bed.

Formulas are mentioned in Table I for a Soy Protein Isolates content of respectively 70% in the structured particulate.

**Table I**

| **Ingredients** | **Formula 70%** |
|---|---|
| **Product Bowl** | |
| Soy Protein Isolates | 70% 2.1kg |
| Maltodextrin M-100 | 20.0% 0.6kg |

| **Spray Solution** | |
|---|---|
| Maltodextrin M-100 | 10.0 % 0.3kg |
| Water | 0.800kg |

### Process:

A. For this recipe in Table I Soy Protein Isolates, Maltodextrin M-100 are placed in a product bowl on the fluid bed.
B. The equipment used for this example was a pilot-scale 5-kg fluid-bed drier top spray.
C. The maltodextrin was mixed in warm water at 25°C (15.0% solids in solution) as the spray solution.

An outlet temperature range of about 30-35°C was used and an air volume, sufficient (damper 1/2 open) to fluidize the product was set. The spray solution was sprayed onto the product in the bowl at a spray rate of 30 grams per minute with an atomization air pressure of 60 psi. Upon completion of the spray solution, the structured particulate was dried at an outlet air temperature of 40°C for 5 minutes. The structured particulate was measured for loss on drying using a Metler LP-16 Metler Moisture Balance result was 4.5%. The structured particulate was sized on a US#10 mesh using a Sweco Sifter to remove any oversized material. Further analytical data for Examples I is shown in Table II. The methods used for analyzing the structured particulate can be found in USP XXIII/NF19.

| Table II: **Analytical Data** | |
|---|---|
| | Soy Protein Isolates ML-70 |
| PS on #20 | 4.9% |
| 40 | 21.7% |
| 60 | 37.0% |
| 80 | 19.5% |
| 100 | 5.5% |
| 200 | 9.6% |
| PAN | 1.8% |
| Loose Bulk | 0.31g/cc |
| Loss on Drying | 4.5% |
| Mean weight diameter | 277.8microns |

The active component (raw material soy protein isolates) used has a particle size distribution of 90% through a US#100 mesh and loose bulk density of 0.39g/cc. Supplier data indicated that this material had a mean weight diameter of less than 113 microns. The method for analyzing the material can be found in USP XXIII/NF19.

The mean weight diameters were calculated as follows: weight fraction at screen multiplied by screen opening (microns), summed for all screen sizes.

The mean weight diameters were calculated as follows: weight fraction at screen multiplied by screen opening (microns), summed for all screen sizes.

### Example VII. Homogeneity

Comparative homogeneity test of structured particulate soy protein isolates with non-structured active particulate component:
1. 20 grams of non-structured active particulate component soy protein isolates is added to 1 kg of vegetable oil and 26 grams of structured particulate (soy protein isolates 70%) to another 1 kg of vegetable oil.
2. Each sample was mixed for 5 minutes with continuous visual inspection for homogeneity.

It is demonstrated that structured particulate soy protein isolates disperses readily in food products resulting in a homogeneous distribution of soy protein isolates in the products with accurate dosing. This is in contrast to non-structured active particulate component soy protein isolates that clumped together and sticks to the container walls, making it extremely difficult to deliver an accurate dose of soy protein isolates to the food product.

### Example VIII. Homogeneity of structured particulates in food

This example illustrates the effect of different forms of isolated soy protein on homogeneity in food products using the structured particulates and soy protein isolates raw ingredient.

### Incorporation of Structured Particulate:

Tempered Chocolate. White chocolate (400 g) was weighed out and melted in a bowl. 100g of Structured Particulate was added to the chocolate & stirred by hand for 20 seconds showing homogeneity. The Structured Particulate mixed very easily into the chocolate. The chocolate mixture was poured into molds, tapped and scraped evenly. The molds were then placed into the cooling chamber at 14.4°C for proper cooling until the chocolate was set. The molds were then removed from the cooling chamber and the chocolates were removed from the molds.

### Incorporation of soy protein isolates raw ingredient:

Tempered Chocolate. White chocolate (430 g) was weighed out and melted in a bowl. 70g of soy protein isolates raw ingredient was added to the chocolate & stirred for 20 seconds. The soy protein isolates was very lumpy and difficult to mix therefore the mixing was continued for another 3 minutes. The chocolate mixture was poured into molds, tapped and scraped evenly. The molds were placed into the cooling chamber at 14.4°C for proper cooling until the chocolate was set. The molds were then removed from the cooling chamber and the chocolates were removed from the molds.

Inspection: The structured particulates and the soy protein isolates raw ingredient white chocolate bars were broken into several pieces. Upon examination, the soy protein isolates raw ingredient white chocolate bars were found to have large tan to off white powdery inclusions, indicating poor homogeneity of soy protein isolates within the chocolate bar. On the other hand, the structured particulate white chocolate bars were found to be free from powdery inclusions and were completely homogenous.

## Claims

1. Structured particulate systems comprising active, organic, solid component(s) in a matrix in a weight ratio of 1 : 99 to 99 : 1 and wherein the active, organic, solid component(s) preferably is selected from one or more of the components from the group consisting of oleanoic acid, ursolic acid, folic acid, policosanol, phytosterols and soy protein isolate, mean weight diameter of the particles of the structured particulate system ranges from 25 to 1500 microns.

2. Structured particulate system according to claim 1 wherein this system displays a loose bulk density of 0.1 to 1.1, preferably 0.3 to 0.6 Kg/l.

3. Structured particulate system according to claims 1 or 2 wherein the mean eight diameter ranges from 50 to 400, more preferably from 60 to 300 microns.

4. Structured particulate system according to claims 1 - 3 wherein the weight ratio between active component and matrix ranges from 80 : 20 to 20 : 80, preferably from 60 : 40 to 40 : 60.

5. Structured particulate system according to claims 1 to 4 wherein the active, organic, solid component has a discrete particle size within the total structured particulate system of 2 to 275, preferably 5 to 250, most preferably 7 to 200 microns.

6. Structured particulate system according to claim 1 to 5 wherein the active organic solid component is a nutritionally active component.

7. Structured particulate system according to claim 6 wherein the nutritionally active component is a component that improves the oral properties of a food product, or the dispersability of the active component in a food.

8. Structured particulate system according to claims 1 to 7 wherein the matrix is edible and is selected from the group consisting of polysaccharides, modified polysaccharides, sugars, gums, thickeners, stabilisers, syrups, flours, starches, dextrose, maltodextrins and celluloses.

9. Method for improving the oral properties and / or the homogeneity of an organic, solid, active component in a food product by incorporating in the food product an effective amount, preferably 0.01 to 50wt % ,preferably 1 to 30 wt % on food product of the structured particulate system as formulated in claims 1 to 8.

10. Food products, in particular selected from the group consisting of margarine, spreads, baked goods, extruded goods, confections, ice-creams and dairy products containing an effective amount of the structured particulated system according to claims 1 to 8.

11. Process for preparing a structured particulate system as defined in claims 1 to 8 wherein:
(i) a solid, organic active component is mixed with a matrix into a homogeneous powder
(ii) a solvent, preferably water is added to part of the powder obtained to dissolve the matrix resulting in an suspension of the active component in water
(iii) part of the powder resulting from step (i) is suspended in the expansion chamber of a fluid bed
(iv) the suspension resulting from (ii) is sprayed onto the suspended powder of step (iii) in the expansion chamber and dried rapidly by a heating medium, preferably heated air.
